# EUROPÄISCHE PATENTANMELDUNG

(11) **EP 1 001 367 A1**
(43) Veröffentlichungstag der Anmeldung: **17.05.2000**
(21) Anmeldenummer: 98811129.0
(22) Anmeldetag: 11.11.1998
(51) Int. Cl.: G06K 19/077

(54) **Verfahren zur Herstellung eines eine Leiterstruktur enthaltenden Kunststoffobjektes**

(71) Anmelder: ESEC Management SA, 6330 Cham (CH); Sempac SA, 6330 Cham (CH)
(72) Erfinder: Ragg, Wolfram, 6332 Hagendorn (CH); Bauknecht, Raimond, 8005 Zürich (CH)

(57) **Zusammenfassung**

Bei der Herstellung eines eine Leiterstruktur (2) enthaltenden Kunststoffobjektes, das eine einseitig hinterspritzte oder beidseitig umspritzte Folie (1) enthält, auf die die Leiterstruktur (2) aufgebracht ist, wird die Leiterstruktur (2) vor dem Vergiessen des Kunststoffobjektes mindestens teilweise mit einer aushärtbaren Substanz bedeckt. Diese Substanz schützt die Leiterstruktur (2) gegen Beschädigungen oder Zerstörung beim Einspritzen des Kunststoffs. Als Substanz besonders geeignet sind Lacke (4) wie z.B. Lötstoplacke, Harze oder Underfillmaterialien.

## Beschreibung

Die Erfindung betrifft ein Verfahren zur Herstellung eines eine Leiterstruktur enthaltenden Kunststoffobjektes der im Oberbegriff des Anspruchs 1 genannten Art.

Beispiele für solche Kunststoffobjekte sind kontaktlos benutzbare Chipkarten, elektronische Schlüssel, Transporttickets, Tags oder Transponder, Spielzeuge und mobile elektronische Kommunikationsgeräte.

Zur Herstellung derartiger Kunststoffobjekte sind Verfahren bekannt, bei denen zuerst eine elektrisch leitende Leiterstruktur auf die Oberfläche einer Folie aufgebracht wird, beispielsweise durch Kaschieren oder im Siebdruckverfahren. Gebräuchliche Folien bestehen aus ABS oder PVC oder Mischungen dieser beiden Kunststoffe. Möglich sind aber auch Folien aus anderen Kunststoffen wie beispielsweise PET. Beim Kaschieren wird eine Metallfolie, vorwiegend eine Kupfer- oder Aluminiumfolie, im Kaltverfahren oder Warmverfahren auf die Folie aufgewalzt und anschliessend die Leiterstruktur durch Ätzen ausgebildet. Um eine für das nachfolgende Hinterspritzen mit Kunststoff ausreichende Haftung der Leiterstruktur auf der Folie zu erreichen, wird die Folie vor dem Kaschieren noch mit einem Klebstoff beschichtet. Beim Siebdruckverfahren wird Silberleitpaste auf die Folie aufgedruckt und so die Leiterstruktur gebildet. Die mit der Leiterstruktur versehene Folie wird anschliessend mit einem elektronischen Chip bestückt und in einer Form zum Kunststoffobjekt vergossen. Der Chip wird entweder in der Flip Chip Technologie, d.h. mit der Oberfläche nach unten, direkt auf Anschlussflächen der Leiterstruktur montiert oder eingebettet in ein Modul auf die Leiterstruktur aufgebracht. Nachteilig bei der Folie, bei der die Haftfähigkeit der Metallschicht mittels eines Klebstoffes verstärkt ist, ist, dass der Klebstoff beim Ätzen der Leiterstruktur auf der Folie zurückbleibt und sich oftmals nur schlecht mit dem eingespritzten Kunststoff verbindet.

Der Erfindung liegt die Aufgabe zugrunde, ein Verfahren zur Herstellung eines solchen Kunststoffobjektes vorzuschlagen, bei dem eine Kleberschicht zwischen der Folie und der Leiterstruktur entfallen kann.

Die genannte Aufgabe wird erfindungsgemäss gelöst durch die Merkmale der Ansprüche 1 und 5. Vorteilhafte Ausgestaltungen ergeben sich aus den abhängigen Ansprüchen.

Nachfolgend werden Ausführungsbeispiele der Erfindung anhand der Zeichnung näher erläutert.

Es zeigen:
- Fig. 1: eine mit einer Leiterstruktur versehene Folie in der Draufsicht,
- Fig. 2: eine weitere Folie, und
- Fig. 3, 4: die Leiterstruktur im Querschnitt.

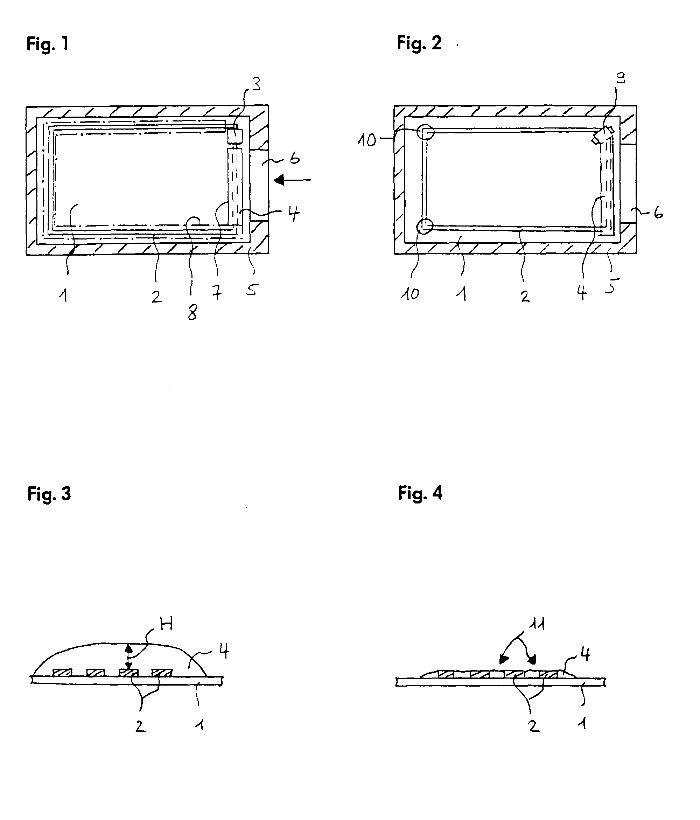

Die Fig. 1 zeigt in der Draufsicht eine Folie 1, auf die eine Leiterstruktur 2 aufgebracht wurde. Die Folie 1 ist mit einem elektronischen Chip 3 bestückt. Der Chip 3 ist als Flip Chip auf der Leiterstruktur 2 montiert, so dass seine aktive Oberfläche nach unten gerichtet ist und dass er in direkter elektrischer Verbindung mit der Leiterstruktur 2 steht. Teile der Leiterstruktur 2 sind mit einer aushärtbaren Substanz, vorteilhaft einem Lack 4 bedeckt. Die Folie 1 ist in eine Form 5 eingelegt, die eine seitlich angeordnete Einspritzöffnung 6 zum Einspritzen von Kunststoff aufweist, der bevorzugt derselbe Kunststoff ist wie der Kunststoff, aus dem die Folie 1 besteht. Nach dem Einspritzen des Kunststoffes bildet die, in der Regel einseitig hinterspritzte, Folie 1 eine Oberfläche eines Kunststoffobjektes. Die Folie 1 kann aber auch beidseitig mit Kunststoff umspritzt werden. Die Leiterstruktur 2 und der Chip 3 befinden sich eingebettet in Kunststoff im Inneren des Kunststoffobjektes. Ein solches Kunststoffobjekt ist beispielsweise eine kontaktlos benutzbare Chipkarte, bei der die Leiterstruktur 2 mehrere spiralförmig angeordnete Leiterbahnen umfasst, die entlang der Peripherie der Chipkarte angeordnet sind und eine Antenne bilden. Die Leiterstruktur 2 kann aber auch weitere Funktionen erfüllen wie Verbindungsleiter zwischen elektronischen Bauteilen oder sie kann z.B. Flächen enthalten, die als Kondensatoren dienen.

Der Lack 4 schützt die Leiterstruktur 2 gegen Beschädigung und/oder Zerstörung beim Einspritzen des Kunststoffes. Am meisten gefährdet sind zum einen diejenigen Teile der Leiterstruktur 2, die sich in unmittelbarer Nähe der Einspritzöffnung 6 befinden, und zum anderen diejenigen Teile der Leiterstruktur 2, die quer zu der mit einem Pfeil angedeuteten Einspritzrichtung angeordnet sind. Ob nun nur Teile der Leiterstruktur 2, wie in der Fig. 1 mit einer ausgezogenen Linie 7 dargestellt, oder die gesamte Leiterstruktur 2, wie in der Fig. 1 mit einer strichpunktierten Linie 8 dargestellt, mit dem Lack 4 bedeckt werden müssen, hängt hauptsächlich davon ab, wie gut die Leiterstruktur 2 auf der Folie 1 haftet und wie gross die auf die Leiterstruktur 2 wirkenden Kräfte beim Einspritzen des Kunststoffes lokal sind.

Der Lack 4 muss auf der Folie 1 gut haften, bei relativ niedriger Temperatur von typisch weniger als 50°C aushärtbar sein, damit sich die Folie nicht wölbt, und hitzebeständig sein, da beim Einspritzen des Kunststoffes Temperaturen von bis zu 200 °C auftreten. Bevorzugt wird ein Lack verwendet, der mit UV-Licht härtbar ist. Als geeignet haben sich insbesondere Lötstopplacke erwiesen. Die Substanz kann aber auch ein Harz sein wie z.B. Protavic® L 117, der bei 50°C aushärtbar ist. Weiter geeignet als Substanz sind sogenannte Underfillmaterialien, die gewöhnlich unter anderem dazu benützt werden, den zwischen dem als Flip Chip montierten Chip 3 und der Folie 1 bestehenden Hohlraum auszufüllen. Derartige Underfillmaterialien sind z.B. unter der Bezeichnung Epotek U300 oder Hysol FP4526 in flüssiger Form erhältlich. Sie sind aber auch als für den Siebdruck verwendbare Pasten erhältlich. Die genannten Substanzen können beispielsweise mit dem Siebdruckverfahren mit dem Tampondruckverfahren, durch Dispensen oder durch Sprühen auf die Folie 1 aufgetragen werden.

Es hat sich gezeigt, dass sich der ausgehärtete Lack 4 und der eingespritzte Kunststoff in der Regel nicht miteinander verbinden und daher nicht oder kaum aneinander haften. Es ist daher angezeigt, die Fläche, die der Lack 4 auf der Folie 1 bedeckt, so gross wie nötig und so klein wie möglich zu halten. Auch ist darauf zu achten, zwischen der Leiterstruktur 2 und dem späteren Rand des Kunststoffobjektes einen ausreichenden Abstand vorzusehen, damit der vergossene Kunststoff entlang des Randes der Chipkarte gut auf der Folie 1 haftet und ein späteres Ablösen der Folie 1 verhindert wird.

Die Fig. 2 zeigt eine Ausführung, bei der die Folie 1 nicht mit dem baren Chip 3, sondern mit einem Modul 9 bestückt ist, in das der Chip 3 eingebettet ist. Das Modul 9 weist zwei Anschlüsse auf, die die als Antenne ausgebildete Leiterstruktur 2 direkt kontaktieren. Das Modul 9 ist deshalb quer zu den Leiterbahnen der Leiterstruktur 2 angeordnet. Der Lack 4 bedeckt hier, sofern nötig, auch die das Modul 9 kreuzenden Leiterbahnen und gewährleistet somit die elektrische Isolation zwischen den Leiterbahnen und dem Modul 9. Weiter sind mit dem Lack 4 zwei weitere, vergleichsweise kleine Flächen 10 der Leiterstruktur 2 bedeckt, damit sich die Folien 1 nach dem Aushärten des Lacks 4 aufeinander stapeln lassen.

Die Fig. 3 und 4 zeigen im Querschnitt die mit dem Lack 4 bedeckte Leiterstruktur 2, die hier vier Leiterbahnen enthält. Bei der Fig. 3 überdeckt der Lack 4 die Leiterstruktur 2 mit einer minimalen Höhe H, während bei der Fig. 4 der Lack 4 nur die Zwischenräume 11 zwischen den Leiterbahnen der Leiterstruktur 2 ausfüllt. Da der Lack 4 auf der Folie 1 gut haftet, vermag er auch in diesem letzteren Fall die beim Einspritzvorgang durch die Front der eingespritzten Kunststoffmasse wirkenden Kräfte aufzunehmen und die Leiterbahnen vor Beschädigungen zu schützen.

Im Folgenden wird nun noch ein weiteres Verfahren zur Herstellung eines Kunststoffobjektes erläutert, bei dem als Leiterstruktur 2 eine gestanzte Antenne vorgesehen ist. Dieses Verfahren umfasst vorteilhaft die folgenden Schritte:
a) Bestücken eines aus einer vergleichsweise dünnen metallischen Folie, insbesondere einer Kupferfolie von beispielsweise 70µm Dicke, gebildeten Leadframes, das auch die Antennenwindungen enthält, mit dem Chip 3 oder Modul 9 und gegebenenfalls weiteren elektronischen Bauteilen.
b) Auftragen des Lacks 4 an vorbestimmten Stellen auf die Folie 1.
c) Freistanzen der Leiterstruktur 2 aus dem Leadframe.
d) Plazieren der Leiterstruktur 2 auf der Folie 1, wobei die Leiterstruktur 2 an den vorbestimmten Stellen in den Lack 4 eintaucht.
e) Aushärten des Lacks 4.
f) Vergiessen oder Laminieren der Folie 1 zum Kunststoffobjekt.

Dieses Verfahren lässt sich auf verschiedene Arten modifizieren, beispielsweise, indem die Leiterstruktur 2 nur eine gestanzte Antenne ist, die vor oder nach der Fixierung auf der Folie 1 mit dem Modul 9 und gegebenenfalls weiteren elektronischen Bauteilen bestückt wird. Die für das Verfahren charakteristischen Schritte sind die Schritte b, d und e. Bei diesem Verfahren dient der Lack 4 nicht nur zum Schutz der Leiterstruktur 2 beim Einspritzen des Kunststoffes oder beim nachfolgenden Laminieren zum Kunststoffobjekt, sondern auch zur Fixierung der Leiterstruktur 2 auf der Folie 1.

Bei einem weiteren Verfahren wird die Leiterstruktur 2 gebildet durch eine aus dünnem Draht als Spule gewickelte Antenne. Dieses Verfahren umfasst die folgenden Schritte:
a) Auftragen des Lacks 4 an vorbestimmten Stellen auf die Folie 1.
b) Plazieren der aus dünnem Draht bestehenden Drahtantenne auf der Folie 1, wobei die Leiterstruktur 2 an den vorbestimmten Stellen in den Lack 4 eintaucht.
c) Aushärten des Lacks 4.
d) Aufbringen des Moduls 9 und gegebenenfalls weiterer elektronischer Bauteile auf die Folie 1, wobei das Modul 9 bzw. die elektronischen Bauteile die Leiterstruktur 2 kontaktieren.
e) Vergiessen oder Laminieren der Folie 1 zum Kunststoffobjekt.

Bei einer Modifikation dieses Verfahrens wird die Drahtantenne nicht im Schritt d nach der Fixierung auf der Folie 1, sondern bereits vor dem Schritt a mit dem Modul 9 bestückt.

Diese beiden Verfahren eignen sich besonders zur Herstellung von Kunststoffobjekten wie beispielsweise Tags, bei denen die Antenne nur relativ kleine Abmessungen erfordert.

## Patentansprüche

1. Verfahren zur Herstellung eines eine Leiterstruktur (2) enthaltenden Kunststoffobjektes, das eine einseitig hinterspritzte oder beidseitig umspritzte Folie (1) enthält, auf die die Leiterstruktur (2) aufgebracht ist, wobei das Kunststoffobjekt durch Vergiessen mit Kunststoff gebildet wird, **dadurch gekennzeichnet, dass** die Leiterstruktur (2) vor dem Vergiessen des Kunststoffobjektes mindestens teilweise mit einer aushärtbaren Substanz bedeckt wird.

2. Verfahren nach Anspruch 1, **dadurch gekennzeichnet, dass** die Substanz mit UV-Licht aushärtbar ist.

3. Verfahren nach Anspruch 1 oder 2, **dadurch gekennzeichnet, dass** die Substanz ein Lack (4), ein Harz oder ein Underfillmaterial ist.

4. Verfahren nach Anspruch 3, **dadurch gekennzeichnet, dass** der Lack (4) ein Lötstopplack ist.

5. Verfahren zur Herstellung eines eine Leiterstruktur (2) enthaltenden Kunststoffobjektes, das eine Folie (1) enthält, auf die die Leiterstruktur (2) aufgebracht ist, **dadurch gekennzeichnet, dass** die Folie (1) mindestens teilweise mit einer aushärtbaren Substanz beschichtet wird, dass die Leiterstruktur (2) auf der Folie (1) plaziert wird, wobei Teile der Leiterstruktur (2) in die Substanz eintauchen, und dass die Substanz anschliessend ausgehärtet wird.

6. Verfahren nach Anspruch 5, **dadurch gekennzeichnet, dass** die Substanz mit UV-Licht aushärtbar ist.

7. Verfahren nach Anspruch 5 oder 6, **dadurch gekennzeichnet, dass** die Substanz ein Lack (4), ein Harz oder ein Underfillmaterial ist.

8. Verfahren nach Anspruch 7, **dadurch gekennzeichnet, dass** der Lack (4) ein Lötstopplack ist.

9. Verfahren nach einem der Ansprüche 5 bis 8, **dadurch gekennzeichnet, dass** nach dem Aushärten der Substanz das Kunststoffobjekt durch Vergiessen mit Kunststoff oder durch Laminieren fertiggestellt wird.
